# EUROPÄISCHE PATENTSCHRIFT

(11) **EP 1 590 874 B1**
(45) Veröffentlichungstag und Bekanntmachung des Hinweises auf die Patenterteilung: **24.02.2010**
(21) Anmeldenummer: 03757711.1
(22) Anmeldetag: 17.10.2003
(51) Int. Cl.: H02K 21/16, H02K 29/03

(54) **Drehstrommaschine mit optimierten Laufeigenschaften**
Polyphase motor with optimised running characteristics
Machine a courant triphase présentant des caractéristiques de fonctionnement optimisées.

(30) Priorität: 30.01.2003 DE 10303848
(43) Veröffentlichungstag der Anmeldung: 02.11.2005
(60) Teilanmeldung: 06020521.8
(73) Patentinhaber: Rexroth Indramat GmbH, 97803 Lohr am Main (DE)
(72) Erfinder: HAHN, Ingo, 97816 Lohr am Main (DE)
(86) Internationale Anmeldenummer: PCT/DE2003/003440
(87) Internationale Veröffentlichungsnummer: WO 2004/070921

(56) Entgegenhaltungen:
- JP-A- 08 251 847
- US-A- 4 751 416
- US-A- 4 769 567
- US-A- 5 610 464
- US-A1- 2002 074 887
- US-B1- 6 222 288

## Beschreibung

Die Erfindung betrifft eine Drehstrommaschine nach dem Oberbegriff der Ansprüche 1 und 6, die unter anderem in elektromechanischen Vorrichtungen als Antrieb oder zur Positionierung und Bearbeitung von Werkstücken verwendet wird. Die Laufeigenschaften derartiger Maschinen - wie zum Beispiel Laufruhe und konstantes Drehmoment - werden im Betrieb durch konstruktiv bedingte Störgrößen negativ beeinflusst.

Eine dieser Störgrößen wird als Rastmoment bezeichnet. Das Rastmoment beruht auf einem Reluktanzeffekt (Reluktanz = magnetischer Leitwert) und setzt sich aus einer Grundwelle sowie harmonischen Oberwellen zusammen. Die Periodizität der Grundwelle ist abhängig von der Geometrie der Maschine. Die Frequenzen der Oberwellen betragen ein ganzzahliges Vielfaches der Grundwelle. Das Rastmoment bewirkt in der Praxis eine Bewegungshemmung, insbesondere beim Start der Bewegung, wenn das Sekundärteil (bewegte Komponente) seine Position relativ gegenüber dem Primärteil (ortsfeste Komponente) verändert. Der am stärksten ausgeprägten Oberwelle, auch dominante Harmonische genannt, ist eine bestimmte Wellenlänge zugeordnet, die die Periodizität der Oberwelle bestimmt.

Eine weitere Störgröße stellt die in den Statorwicklungen induzierte Spannung dar. Die induzierte Spannung wird durch die Änderung der Flussverkettung hervorgerufen und zeigt aufgrund des nicht sinusförmigen Erregerfeldes in der Regel einen mehr oder weniger oberwellenbehafteten Signalverlauf. Die gemessene Oberwelligkeit der induzierten Spannung ist ein Maß für die später im Betrieb der Maschine auch unter Last vorhandene Welligkeit des Drehmomentes. Die Welligkeit beeinflusst mehr oder weniger die Präzision der ausgeführten Bewegung sowie die Lebensdauer der Maschine und kann prozentual über die Formel zur Berechnung des Klirrfaktors erfasst werden, indem der Oberwellenanteil zur Grundwelle ins Verhältnis gesetzt wird.

Zur Reduzierung des Rastmomentes wurden bereits verschiedenste Methoden entwickelt. Es ist z.B. bei mehrpoligen, rotationssymmetrischen und permanentmagnetisch erregten Maschinen möglich, diese Störgröße durch geschrägte Magnetisierung oder gestaffelte Rotormagnete sowie durch schräg angeordnete Statornuten zu reduzieren. Diese Verfahren erhöhen aber den Fertigungsaufwand, da zusätzliche Bearbeitungsschritte erforderlich werden, was die Produktionskosten steigert.

Ein weiterer Lösungsansatz zur Rastmomentreduzierung besteht darin, den Abstand zwischen den für das Erregerfeld verantwortlichen magnetischen Polen zu variieren. Die Idee ist ausführlich in den Veröffentlichungen Bianchi, N., Bolognani, S.: Reducing torque ripple in PM synchronous motors by pole shifting; In: Proc. ICEM 2000, pp. 1221 - 1226. Helsinki: Helsinki University of Technology, 2000 und W. Cai, D. Fulton, K. Reichert: Design of permanent magnet motors with low torque ripples: a review; In: Proc. ICEM 2000, pp. 1384 - 1385. Helsinki: Helsinki University of Technology 2000 beschrieben. Auch zu zusammengefässte Pole können bei geschickt gewählter Anordnung zueinander eine Reduzierung des Rastmomentes herbeiführen. Hiervon wird in der Offenlegungsschrift DE 41 33 723 A1 Gebrauch gemacht. Der in dieser Schrift gezeigte Drehfeldmotor besitzt einen achteckigen Rotor auf dessen Umfang Pole verteilt sind. Vier Pole bilden eine Einheit. Die Abstände der Pole untereinander sind ungleichmäßig. Insgesamt existieren zwei Einheiten mit je 4 Polen, deren Rastmomente sich phasenverschoben überlagern und damit das resultierende Rastmoment der Maschine verringern. Bei der aufgezeigten Lösung wird nur die Grundwelle des Rastmomentes betrachtet und nicht vollständig kompensiert. Oberwellen des Rastmomentes werden nicht betrachtet. Auch sei erwähnt, dass die im Beispiel gezeigte Ausführung des Rotors zu einem ungleichmäßigen Luftspalt führt und der Aufbau nicht umfangssymmetrisch ist. Es entsteht eine Unwucht, was bei der Drehung eine periodisch überlagerte Störkraft auf die Achslager bewirkt. Mit kleinen Gewichten oder bohrungen muss diese Unwucht ausgeglichen werden, um Lagerschäden vorzubeugen.

Die in der Schrift DE 41 33 723 A1 gezeigte Anordnung wurde außerdem nicht in bezug auf die in der Wicklung des Primärteiles erzeugte, induzierte Spannung untersucht. Insbesondere bei der Realisierung eines Generators ist aber eine möglichst sinusförmige Ausgangsspannung gewünscht. Je höher der Oberwellengehalt der Ausgangsspannung ist, desto höher ist die Abweichung von der reinen Sinusform. Bei einem Motor dagegen wäre ein möglichst oberwellenfreies Drehmoment gefordert. In den Veröffentlichung von Jaime De La Ree und Nady Boules: Magnet Shaping To Reduce Induced Voltage Harmonics In PM Machines With Surface Mounted Magnets. In: IEEE Transactions on Energy Conversion, Vol. 6, No. 1, March 1991 oder Induced Voltage Harmonics Reduction of PM Cylindrical Machines. In: IEEE Transactions of Industrial Applications on Industry Applications, Vol. 28, No. 3, May/June 1992 werden Lösungsansätze zur Reduzierung der Oberwelligkeit diskutiert. Hier versucht man bei permanentmagneterregten Motoren das Problem durch Optimierung der Abmessungen und Form der Erregermagneten in den Griff zu bekommen. Es ist bekannt, dass der Signalverlauf der Leerlaufspannung durch die Form der Erregermagnete beeinflusst werden kann, zum Beispiel durch Verwendung von radial magnetisierten Schalenmagneten. Speziell beim Aufbau größerer Rotordurchmesser können aber aufgeklebte Schalenmagnete zur Reduzierung der induzierten Spannung nicht mehr verwendet werden, da diese zu hohen Wirbelstromverlusten beitragen. Größere Rotoren können auch mit preiswerteren, segmentierten Flachmagneten realisiert werden, um die Wirbelstromverluste zu begrenzen. Es treten dann aber wegen der veränderten Magnetform wieder verstärkt Oberwellenanteile der induzierten Spannung auf.

Auch über die Magnetbreite lassen sich Oberwellen beeinflussen und reduzieren. Diesen Lösungsansatz verfolgt die Anmeldung EP 1130747 A2, indem zwischen den beiden Seiten eines in den Stator eingebetteten Magneten und der Rotorachse ein Winkel definiert wird, dessen Größe man variiert, um den Feldverlauf zu beeinflussen. Hierdurch optimiert man unter anderem die induzierte Spannung und das Rastmoment. In der Praxis führt das allerdings zu geometrieabhängigen, aufwendigen Fertigungsprozeduren. Ziel ist es aber Standardmagnete zu verwenden, die in großen Stückzahlen eingekauft und für verschiedenste Maschinengeometrien eingesetzt werden können, unabhängig von den Abmessungen der Maschine.

Dokument JP 08 251847 A offenbart eine Drehstrommaschine mit einem Primärteil mit Nuten und elektrischen Strängen, sowie ein Sekundärteil mit einer Anzahl von Polpaaren bestehend aus je zwei magnetischen Polen unterschiedlicher Polarität, wobei die Pollücke für alle Polpaare gleich ist und sich aus einer Gleichverteilung' aller Pole auf dem Sekundärteil ergibt und wobei zumindest ein Polpaar bei unveränderter Pollücke um einen vorbestimmten Abstand gegenüber einer äquidistanten Verteilung aller Polpaare verschoben ist. Aus der Schrift ist bekannt, wie man eine einzige Störgröße, nämlich die des Rastmomentes reduzieren kann.

Die Erfindung soll den Fachmann eine Methode lehren, mit der er die Störgrößen einer Drehstrommaschine im Betrieb reduzieren kann. Die zentrale Aufgabe der Erfindung ist es dabei, sich nicht auf einen Störfaktor zu beschränken, sondern einen Kompromiss zu finden, der zu einer effizienten Reduzierung von zumindest zwei zusammenhängenden Störgrößen führt. Der fertigungstechnische Aufwand und die daraus resultierenden Herstellungskosten sollen möglichst gering ausfallen.

Zusätzlich ist es Aufgabe der Erfindung eine Vorrichtung bereitzustellen, mit deren Hilfe bei der erfindungsgemäßen Herstellung einer permanentmagneterregten Drehstrommaschine die Pole realisiert werden können.

Bei elektrischen Maschinen, die zur Bearbeitung (u.a. Fräsen, Schleifen, Bohren) von Werkstücken dienen, soll die Erfindung die Präzision der zu bearbeitenden Teile erhöhen und damit die Fertigungstoleranzen verringern.

Diese Aufgaben werden erfindungsgemäß durch die in Anspruch 1 dargelegte Ausführungsform gelöst.

Die Erfindung gemäß Anspruch 1 hat den Vorteil, dass
neben der geometrisch bedingten Auslöschung der Grundwelle des Rastmomentes durch einen neu geschaffenen Freiheitsgrad bezüglich der Anordnung und Abstände der Polpaare zueinander eine zusätzliche Dämpfung höherer Harmonischer des Rastmomentes erreicht wird, was sich insgesamt positiv auf das vorhandene Rastmomentspektrum auswirkt;
einzelne Fertigungsschritte, wie das Schrägen der Nuten oder Staffeln von Magneten, komplett eingespart und somit Kosten gesenkt werden können;
nun eine universelle Methode zur Rastmomentreduzierung zur Verfügung steht, da eine Anwendung auf prinzipiell alle Maschinentypen möglich ist;
die höheren Harmonischen der induzierten Spannung neben dem Rastmoment zusätzlich eine Dämpfung erfahren und damit die Drehmomentwelligkeit reduziert wird, obgleich die Optimierung auf eine möglichst effektive Reduzierung des Rastmomentes ausgelegt ist.

Ein Prinzip der Erfindung liegt somit in der Anordnung der magnetischen Polpaare sowie der Dimensionierung der Pollücken und der Polpaarlücken, so dass sich sowohl für das Rastmoment als auch für die höheren Harmonischen der induzierten Spannung eine vorteilhafte Dämpfung ergibt. Das Prinzip ist auf jeden Maschinentyp anwendbar, also zum Beispiel auf Außen- und Innenläufer sowie auf Linearmotoren. Die magnetischen Pole können dabei sowohl auf dem Sekundärteil befestigt als auch integriert, also innenliegend, sein, so dass sich im letzteren Fall ein gleichmäßiger mechanischer Spalt zwischen Primär- und Sekundärteil ergibt. Je nach Geometrie der Maschine und Aufgabenstellung erreicht man den erfindungsgemäßen Effekt dadurch, dass die Lücken zwischen benachbarten, unterschiedlichen Polpaaren reduziert bzw. vergrößert werden. Im Falle eines rotationssymmetrischen Systems kann der Abstand anstatt über die Nutteilung auch über einen Winkelbetrag definiert sein. Der Winkel kennzeichnet dabei ein Kreissegment des Rotorumfangskreises, während der Abstand der Bogenlänge dieses Segments entspricht. Bei Linearmotoren wird der Abstand in der Regel durch eine Strecke zwischen den Polen definiert.

Die erfindungsgemäße Lösung ist nicht auf bestimmte Oberwellen des Rastmomentes oder der induzierten Spannung beschränkt. Die im Betrieb vorhandenen Oberwellen und, deren Intensität hängen vielmehr von der Geometrie und Ausführung des Primär- und Sekundärteiles ab, insbesondere von dem Nut/Pol-Verhältnis der Maschine, der Nut- und Polteilung, der Spulenweite der Dreh- bzw. Wanderfeldwicklung, dem Spulenfaktor, der Realisierungsform der Pole (Höhe, Breite und Form bei Permanentmagneten), der Lochzahl, der Strangzahl, der Wicklungsmethode (konzentriert oder verteilt) und der Verschaltung der Wicklungen bzw. Spulengruppen untereinander (parallel, seriell oder Kombinationen daraus). Die erforderlichen Pollücken und Polpaarlücken sind daher für jede Maschine neu zu berechnen und auf die zu dämpfenden Oberwellen bzw. gewünschten Effekte abzustimmen. Die erforderliche Polbedeckung hängt von dem durch die Anwendung geforderten Drehmoment ab und kann sehr unterschiedlich ausfallen. Die praktisch realisierbaren Pol- und Polpaarlücken sind durch die benötigte Polbedeckung vorbestimmt und können im Rahmen der sich ergebenden Verschiebungsbandbreite für eine Optimierung bestmöglich ausgenutzt werden.

Für eine Drehstrommaschine gemäß Anspruch 1 ergibt sich eine allgemeine Regel, die den Vorteil bietet, die Rotorpolpaare ohne komplizierte Berechnungen abhängig vom Typ des Motors optimal zu platzieren. Abhängig von der Polpaarzahl und der zu dämpfenden Wellenlänge lassen sich die zu realisierenden Abstände zwischen den Polpaaren berechnen. Zusätzlich reduzieren sich durch die Polpaaranordnung Harmonische der induzierten Spannung in den Primärteilwicklungen. Die magnetische Kopplung zwischen Sekundär- und Primärteil wird optimiert und wirkt sich vorteilhaft auf das Betriebsdrehmoment aus. Die magnetischen Pole können mittels aller aus dem Stand der Technik bekannten Magnetisierungsverfahren erzeugt werden. Der erfindungsgemäße Effekt ist also nahezu unabhängig vom Magnetisierungsverfahren und damit auf unterschiedlichste Maschinen anwendbar.

Legt man ein Bezugspolpaar P1 gemäß Anspruch 2 fest und verringert bei Betrachtung einer rotationssymmetrischen Anordnung den Winkelabstand zu dem benachbarten Polpaar P2 um 3,75° (Drehung im Uhrzeigersinn), so hat dies den Vorteil, dass die 24. Harmonische des Rastmomentes um etwa 21% gedämpft wird.

Betrachtet man erneut das Bezugspolpaar P1 gemäß Anspruch 3 und verringert den Winkelabstand zum benachbarten Polpaar P2 um 3,75° und den Winkelabstand zum benachbarten Polpaare P4 um - 3,75 ° (Drehung gegen den Uhrzeigersinn), so führt dies zu einer äußerst vorteilhaften Dämpfung von etwa 50 %.

Eine völlige Auslöschung der 24. Harmonischen wird erreicht, wenn das dritte Polpaar P 3 gemäß Anspruch 4 zusätzlich aus seiner Mittellage (7) um 7,5° verschoben wird (Drehung im Uhrzeigersinn). Hierdurch ergibt sich der maximal mögliche Vorteil der Anordnung, eine in der Praxis nahezu ausgelöschte 24. Harmonische des Rastmomentes. Relativ preiswert lässt sich gemäß Anspruch 5 die Maschine durch Verwendung von Permanentmagneten zur Erzeugung des Erregerfeldes herstellen. Diese Magnete können in großen Stückzahlen bezogen und über eine Bestückungsvorrichtung in einem automatisierten Prozess im Sinne der Erfindung mit dem Sekundärteil verbunden werden. Zur Realisierung der Erregerpole sind alle aus dem Stand der Technik bekannten Verfahren denkbar, zum Beispiel auch Erregerwicklungen. Die exakte Realisierung der errechneten Abstände gestaltet sich jedoch bei Verwendung von Permanentmagneten am unkompliziertesten.

Bei Verwendung von mehreren Einzelmagneten zur Herstellung eines Pols gemäß Anspruch 6, lassen sich Fertigungstoleranzen der Rohlinge kompensieren, so dass die Lücken zwischen Polen und Polpaaren exakter realisierbar sind. Auch die Erwärmung des Sekundärteiles durch Wirbelstromverluste verringert sich dadurch.

Verwendet man wie in Anspruch 7 angegeben für die Erregerpole einer Synchronmaschine beispielsweise magnetisierte Ringe oder Röhren, so wird eine sehr hohe Präzision erreicht und die zu realisierenden Abstände im Sinne der Erfindung lassen sich im Gegensatz zu aufgeklebten Polen sehr exakt reinhalten. Es sind hier alle aus dem Stand der Technik bekannten Formen der Magnetisierung denkbar, zum Beispiel parallel, diametral, multipolar und radial. Die Besonderheit bei dieser Ausführungsform liegt in der Realisierbarkeit sehr schmaler Pol- bzw. Polpaarlücken, was zum Beispiel bei hoher Polbedeckung erforderlich werden kann. Die Anforderung an die hohe Präzision ergibt sich aus der praktischen Anwendung, denn schon geringe Abweichungen führen, wie bereits erwähnt, zu einer verhältnismäßig großen Beeinflussung der Dämpfungseigenschaften.

Durch geschrägte Nuten gemäß Anspruch 8 lassen sich Oberwellen des Rastmomentes und der induzierten Spannung zusätzlich beeinflussen. Gleiches gilt für die gestaffelte oder geschrägte Montage der Permanentmagnete auf oder unterhalb der Oberfläche des Sekundärteiles entlang der Rotorachse (beispielsweise bei einem rotationssymmetrischen System), so dass die üblicherweise parallel zur Rotorachse ausgebildete Längsachse eines Pols nun um einen bestimmten Winkel gegenüber der Rotorachse geneigt ist.

Die Ausführung gemäß Anspruch 9 erfordert besondere Maßnahmen in Bezug auf die vorhandene Oberwelligkeit der induzierten Spannung im Gegensatz zu einer verteilten Anbringung der Wicklungen, wo Oberwellen über die Spulenweite und die Verschaltung der Spulen beeinflussbar sind. Diese Maßnahmen stehen jedoch bei Verwendung einer konzentrierten Wicklung nicht zur Verfügung, denn im Falle eines rotationssymmetrischen Stators ist um jeden einzelnen Statorzahn eine eigenständige Wicklung aufgebracht und wirkt abhängig von der Geometrie auf bestimmte Frequenzen wie eine Resonator. Das erfindungsgemäße Prinzip vermindert diese Oberwellen ganz gezielt und wirkt sich deshalb vorteilhaft auf die induzierte Spannung bei konzentrierter Wicklung aus.

Kommt die erfindungsgemäße Drehstrommaschine als Generator entsprechend Anspruch 10 zum Einsatz, so liefert dieser eine der idealen Sinusform sehr ähnliche Leerlaufspannung.

Eine andere vorteilhafte Ausgestaltung der Erfindung ist die Verwendung als Motor gemäß Anspruch 11, wenn eine hohe Anforderung an die Präzision der Drehbewegung gestellt wird. Beide erfindungsgemäße Maßnahmen, nämlich die Reduzierung des Rastmomentes und der Oberwellen der induzierten Spannung führen zu einem stabileren, oberwellenbereinigten Drehmoment.

Ein besonders wichtiges Kriterium von Maschinen im Werkzeug- und Formenbau entsprechend Anspruch 12 ist die geforderte präzise Ausführung der Arbeitsgänge. Hierzu gehört zum Beispiel die Freiformflächenbearbeitung (Fräsen von Konturen, Drehen, Schleifen, Polieren, Lasern, Bohren) sowie ein exaktes Positionieren der Werkzeuge. Beispielsweise wird mit einem kugelförmigen Fräswerkzeug zeilenweise die fertige Kontur erzeugt. Der Abstand der Bahnen und die präzise Führung des Werkzeuges bestimmt maßgeblich die Oberflächenqualität und Güte des Werkstückes. Auch eine lange Lebensdauer der Maschinen ist erwünscht, was konsequenterweise den Wartungsaufwand verringert. Ein erfindungsgemäßer Motor erfüllt diese hohen Anforderungen bei vertretbarem Kosten/Nutzen-Verhältnis und begünstigt damit eine preiswerte Herstellung der bearbeitenden Maschinen.

Die erforderlichen Vorrichtungen zur Herstellung einer solchen Maschine ergeben sich aus den Ausführungen in Anspruch 13 und 14. Anspruch 13 berücksichtigt den Fertigungsprozess der Magnetisierung, wobei die am Sekundärteil angebrachten Rohlinge unter Beachtung der geometrischen Anordnung nach der Montage magnetisiert werden können. Der Vorteil hierbei ist, dass der Montageprozess sich bei nicht magnetisierten Rohlingen wesentlich einfacher gestalten lässt als bei direkter Verwendung von Permanentmagneten. Der Montageprozess selbst wird durch Anspruch 14 berücksichtigt. Nachdem die geometrische Anordnung der Erreger festgelegt ist, kann dieser Prozess in der Großserienfertigung eingesetzt werden. Der Vorteil hierbei liegt in der Tatsache, dass bei Verwendung von Magneten als Erreger während des Aufkleben oder durch anderweitiges Aufbringen der Rohlinge am Sekundärteil bereits die ermittelten Pollücken (nicht magnetisierter Bereich zwischen zwei unterschiedlichen Polen eines Polpaares) und Polpaarlücken (nicht magnetisierter Bereich zwischen zwei Polpaaren) automatisch sehr genau eingehalten werden. Nach diesem Fertigungsschritt befinden sich die Erregerpole also bereits an der richtigen Position (z.B. auf einem Rotor) und es wird keine Nachbearbeitung erforderlich. Weitere vorteilhafte Ausgestaltungen der Erfindung lassen sich den zusätzlich aufgeführten Unteransprüchen entnehmen.

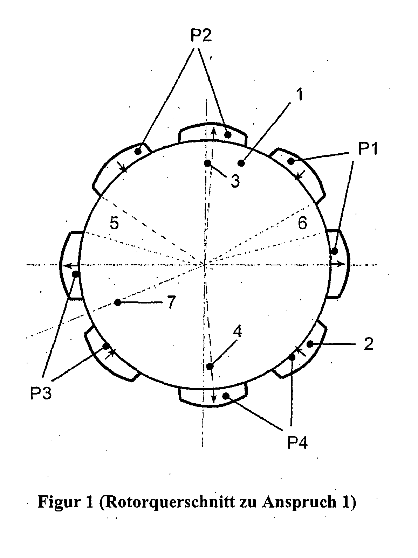

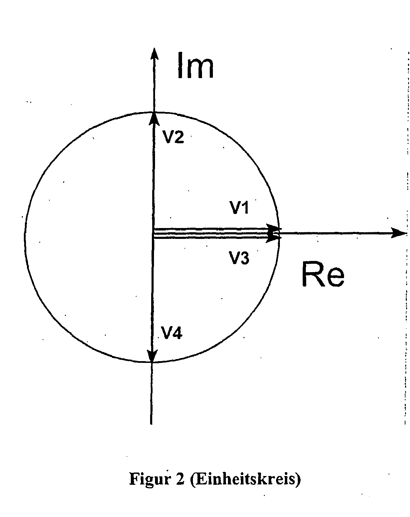

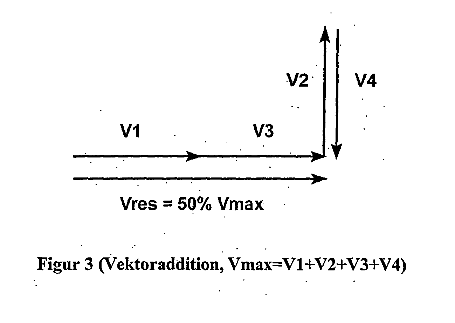

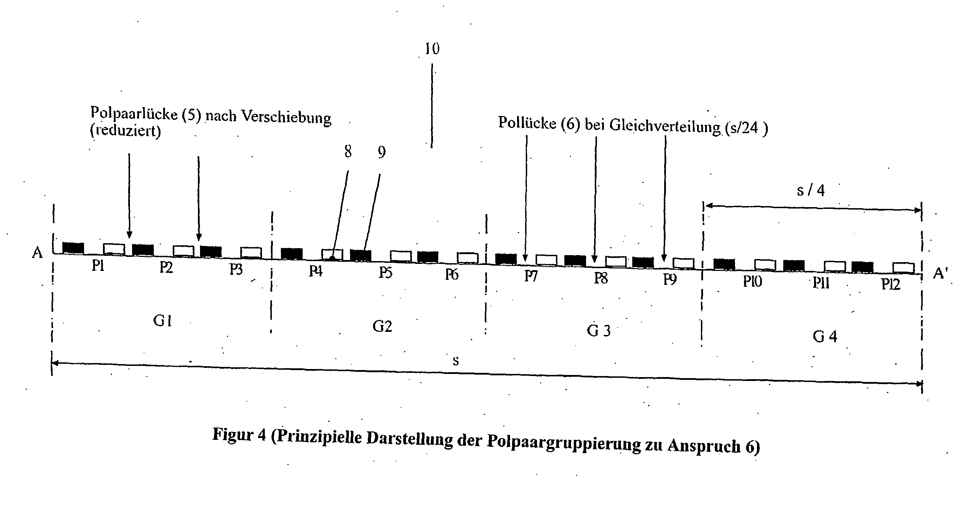

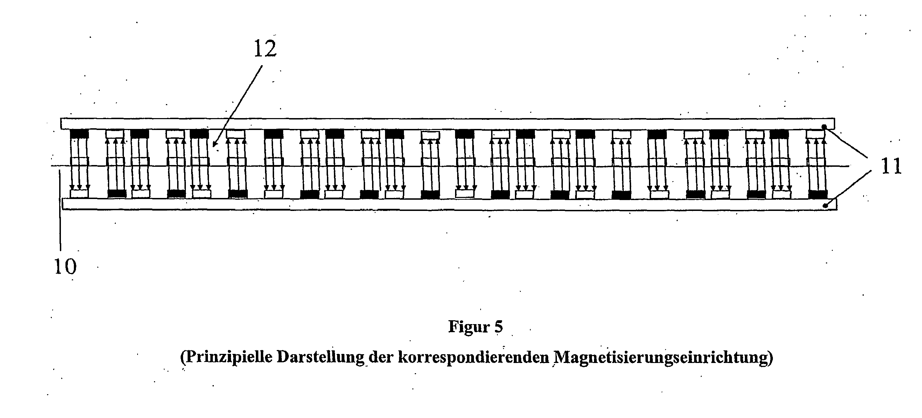

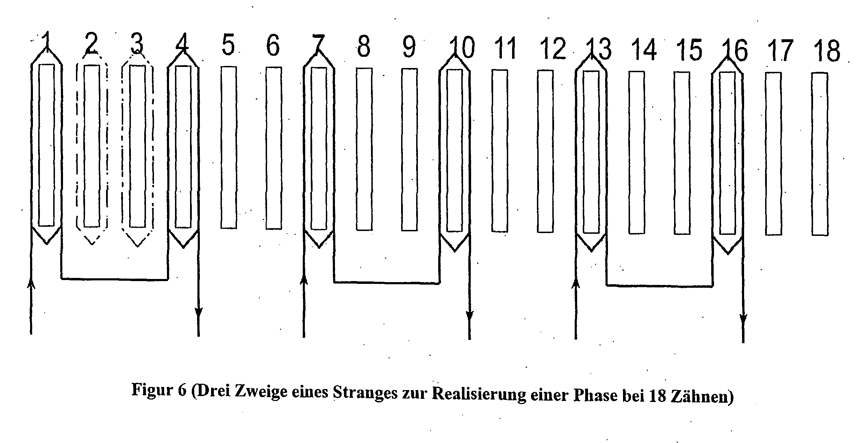

Alle Figuren 1 bis 6 sind schematische oder grob schematische Skizzen und dienen ausschließlich der Veranschaulichung der schriftlichen Erläuterungen. Figur 1 zeigt einen erfindungsgemäß ausgeführten Rotor im Querschnitt und Figur 2 die vektorielle Darstellung (V1-V4) der Komponenten, der 24. Harmonischen des Rastmomentes im Einheitskreis. Das zum Vektor (V1-V4) gehörige Polpaar ist mit (P1-P4) gekennzeichnet (siehe Figur 1). Figur 3 stellt die Superposition aller Vektoren dar. Figur 4 zeigt die Gruppeneinteilung der Polpaare gemäß Anspruch 6. Figur 5 veranschaulicht grob die zum Sekundärteil aufgebaute korrespondierende Geometrie einer Magnetisierungseinrichtung. Figur 6 zeigt am Beispiel einer Maschine mit N=18 Nuten die Realisierung der verteilten Zahnwicklung bei einer Strangzahl von m=3 für einen Strang.

Figur 1 zeigt einen erfindungsgemäß hergestellten Rotor (1). Als Ausführungsbeispiel wird ein 3-phasiger rotationssymmetrischer Drehfeldmotor mit einem Verhältnis 3:2 (Anzahl der Nuten im Stator / Polzahl am Rotor) gewählt. Der Stator hat zwölf Nuten und der Rotor acht über den Umfang gleichmäßig verteilte Permanentmagnete ((2), 4 Süd- und 4 Nordpole) zur Erzeugung des Erregerfeldes. Selbstverständlich könnte das Erregerfeld auch über Erregerwicklungen erzeugt werden, die dann im Sinne der Erfindung am Rotor (1) zu platzieren wären. Die Ausführung des zum Betrieb unverzichtbaren Stators (hier nicht dargestellt) kann dem Stand der Technik entnommen werden. Die Wicklung des Stators wird als Polwickluhg mit einer Strangzahl von beispielsweise m=3 ausgeführt. Die Lochzahl für diese Anordnung errechnet sich zu 12/ (2 x 4 x 3) = 0,5. Auf dem Rotor (1) sind Permanentmagnete (2) aufgebracht, die einen Nord- oder Südpol bilden. Zwei benachbarte Pole (2) unterschiedlicher Polarität bilden jeweils ein Polpaar (P1-P4). Der Abstand der beiden Pole (2), eines Polpaares (P1-P4) beträgt bei einer Gleichverteilung über den Rotorumfang konstant 45°. Dies bewirkt ein Auslöschen der 12. Harmonischen des Rastmomentes. Der Abstand aller Polpaare (P1-P4) ist wegen der Gleichverteilung der Pole (2) zunächst ebenfalls konstant. Das Polpaar P1 soll nun als Bezugspolpaar ausgewählt und in seiner Position auf dem Rotor nicht mehr verändert werden. Gleiches gilt für das gegenüberliegende Polpaar P3. Gemäß der in Anspruch 1 aufgezeigten Berechnung der dominanten Harmonischen des Rastmomentes aus 6 x p (6 x Anzahl der Polpaare) ergibt sich somit die 24. Harmonische als dominante Harmonische für die gewählte Anordnung. Das gezeigte Polpaar P2 ist jetzt gemäß der in Anspruch 1 gezeigten Formel um + ¼ der Wellenlänge der 24. Harmonischen verschoben, d.h. der Winkelabstand der Polpaare P1 und P2 ist um 3,75° reduziert. Am Rotor entspricht das einer Verschiebung von P2 im Uhrzeigersinn. Das Polpaar P4 ist um - ¼ der Wellenlänge der 24. Harmonischen verschoben, womit sich der Winkelabstand von Polpaar P1 und P4 um ebenfalls 3,75° reduziert ist, was einer Verschiebung gegen den Uhrzeigersinn am Rotor gleichzusetzen ist.

Figur 2 stellt die Auswirkung der in Figur 1 gezeigten Polpaarverschiebung im Einheitskreis dar. Die Verschiebung der Phase des Vektors V2 µm α*_{v,p}* = ²⁻¹/₄ = + 1/4 der Wellenlänge bedeutet ein Voreilen dieses Vektors gegenüber Vektor V1 um + 45°. Die Verschiebung des Vektors V4 um α*_{v,p}* = ³⁻¹/₄ = + 3/4 bzw. vereinfacht um - ¼ der Wellenlänge bedeutet ein Nacheilen des Vektors V4 gegenüber Vektor V1 um 45°. Die Phase von Vektor V3 bleibt unverändert gegenüber der des Vektors V1.

Die Überlagerung aller Vektoren (V1-V4) ist in Figur 3 dargestellt. Eine mathematisch positive Drehung entspricht im Einheitskreis einer Drehung gegen den Urzeigersinn und mechanisch am Rotor in diesem konkreten Beispiel einer Drehung im Uhrzeigersinn. Eine mathematisch negative Drehung entspricht dagegen im Einheitskreis einer Drehung im Uhrzeigersinn und mechanisch am Rotor einer Drehung gegen den Uhrzeigersinn. Es sind aus Gründen der Übersichtlichkeit in den schematischen Figuren 1 bis 3 nur die zum Verständnis erforderlichen Details aufgezeigt. Es wird deutlich, dass sich die Vektoren 2 und 4 auslöschen, da sie gegenphasig zueinander im Einheitskreis liegen. Die Vektoren 1 und 3 dagegen addieren sich auf, denn sie sind gleichphasig zueinander. Die Summe der beiden Vektoren Vᵣₑₛ ergibt das resultierende Rastmoment für die gewählte Anordnung. Es ist gegenüber einer Rotorkonstruktion ohne Polpaarverschiebung um 50 % reduziert.

Figur 4 zeigt, wie die Polpaare (P1-P12) entlang der Strecke s zu verteilen sind, um eine nicht erfindungsgemäße Lösung zu realisieren. Ein Polpaar (P1-P12) ist jeweils mit P + laufende Nummer gekennzeichnet. Die unterschiedlichen Farben der Pole (8,9) kennzeichnen die unterschiedliche Polarität der Pole (8,9) eines Polpaares (P1-P12). Es könnte sich hier um die Komponente (10) eines Linearmotors oder um die lineare Darstellung des Rotorumfangs (10) einer rotationssymmetrischen Maschine handeln, die parallel zur Rotorachse aufgeschnitten wurde (Schnittlinie A-A'). In beiden Fällen werden Permanentmagnete (8,9) zur Erzeugung des Erregerfeldes verwendet. In dem gezeigten Beispiel stehen 24 Pole (8,9) zur Verfügung. Bei. Gleichverteilung entlang der Streckes stellt sich eine identische Pollücke (6, s/24) für alle Pole (8,9) ein. 12 Pole (8,9) sind als Nordpol und 12 als Südpol ausgelegt. Jeweils zwei nebeneinanderliegende Pole (8,9) unterschiedlicher Polarität bilden die Polpaare P1 bis P12. Auch die Polpaarlücken (5) liegen damit zunächst konstant bei s/24. Jeweils 3 Polpaare (P1-P3, P4-P6, P7-P9, P10-P12) bilden die Gruppen Ge1 bis G4 mit einer Breite von s/4 je Gruppe. Die Pollücken (6) der Polpaare (P1-P12) innerhalb der Gruppen (G1-G4) sind reduziert dargestellt und wurden so optimiert, dass sich der erfindungsgemäße Effekt einstellt. Das Prinzip dieser Anordnung ist auf eine beliebige Anzahl von Polpaaren (P1-P12) anwendbar. Bedingung ist jedoch, dass jedes Polpaar (P1-P12) einer Gruppe (G1-G4) angehört und alle Gruppen (G1-G4) eine einheitliche Anzahl von Polpaaren (P1-P12), mindestens aber zwei Polpaare, enthalten. Die Anzahl der Polpaare (P1-P12) muss daher stets durch die Anzahl der Gruppen (G1-G4) ohne Rest teilbar sein.

Figur 5 zeigt grob schematisch, dass die felderzeugenden Pole der Magnetisierungsvorrichtung (11) korrespondierend zu den Magnetrohlingen des Sekundärteiles (10) angeordnet werden, um diese abwechselnd im Sinne der Erfindung zu magnetisieren. Wesentlich bei dieser Darstellung ist, dass die Lücken zwischen den Magnetisierungspolen identisch mit den Pol- (6) und Polpaarlücken (5) des Sekundärteiles sind. Die eingezeichneten Pfeile deuten das magnetische Feld (12) an. Durch die Ausführung der felderzeugenden Einheiten sind unterschiedlichste Magnetisierungsprinzipien denkbar. Im Beispiel wird eine parallele Magnetisierung gezeigt.

Figur 6 zeigt die Ausführung der Urwicklung bestehend aus 2 Spulen (Zahn 1+4; 7+10 und 13+16) für einen Strang schematisch bei einer Nutzahl N=18, wobei die Verschaltung der einzelnen Urwicklungen hier noch offen ist. Die freien Zähne können von zwei weiteren Strängen belegt und im Sinne von Strang 1 bewickelt werden. Die Zähne sind mit den Nummern 1 bis 18 gekennzeichnet.

### Bezugszeichenliste

- Px: Polpaar Nr. x, x = 1-4 (Anspruch 1) bzw. 1-12 (Anspruch 6)
- V1 - V4: Vektor 1 bis 4 der 24. dominanten Harmonischen des Rastmomentes
- V5: Resultierender Vektor nach Addition von V1 bis V4
- 1: Rotorquerschnitt (Sekundärteil, Anspruch 1)
- 2: Polquerschnitt.
- 3,4: Verschiebungswinkel der Poolpaare P2 und P4 aus ihrer Ruhelage
- 5: Polpaarlücken
- 6: Pollücke
- 7: Mittelachse eines Polpaares, hier P3
- 8: Pol mit Polarität 1
- 9: Pol mit Polarität 2
- 10: Sekundärteil (Anspruch 6)
- 11: Schnitt durch eine Magnetisierungsvorrichtung (grob schematisch)
- 12: Feldorientierung
- s: Strecke, auf der die Pole gleichverteilt sind
- s/4: Strecke, die eine Gruppe einnimmt

## Patentansprüche

1. Drehstrommaschine mit folgenden Merkmalen:
- Primärteil mit N Nuten und m elektrischen Strängen;
- Sekundärteil (1) mit einer Anzahl von p Polpaaren (P1 - P4), bestehend aus je zwei nebeneinander liegenden magnetischen Polen (2) unterschiedlicher Polarität; wobei
1.1 die Pollücke (6) zwischen den Polen eines Polpaares für alle Polpaare (P1 - P4) gleich ist und sich aus einer Gleichverteilung aller Pole (2) auf dem Sekundärteil (1) ergibt;
1.2 zumindest ein Polpaar (P1 - P4) bei unveränderter Pollücke (6) um einen vorbestimmten Abstand (5) gegenüber einer äquidistanten Verteilung aller Polpaare verschoben ist
**dadurch gekennzeichnet, dass**
bei einem Nut/Pol - Verhältnis N/P = 3:2 die Polpaare Pv (P1 - P4) um α*_{v,p}* = ^{*v*-1}/ₚ ; *v* = 1 ...*p* (3,4) der Wellenlänge der 6 x p ten dominanten Harmonischen des Rastmomentes gegenüber der Ruhelage, die sich bei Gleichverteilung ergibt, verschoben sind und sich damit die Polpaarlücken (5) verringern oder vergrößern.

2. Drehstrommaschine nach Anspruch 1, **dadurch gekennzeichnet, dass** bei einem Motor mit N=12 Nuten und p = 4 Polpaaren (P1 - P4) das Polpaar P2 neben dem Bezugspolpaar P1 um + 1/4 der Wellenlänge der 24. Harmonischen des Rastmomentes, im Sinne einer Verringerung der Polpaarlücke (5) zwischen P1 und P2, verschoben ist.

3. Drehstrommaschine nach Anspruch 2, **dadurch gekennzeichnet, dass** zusätzlich das Polpaar P4 um -1/4 der Wellenlänge der 24. Harmonischen des Rastmomentes, im Sinne einer Verringerung der Polpaarlücke (5) zwischen P1 und P4, verschoben ist.

4. Drehstrommaschine nach Anspruch 3, **dadurch gekennzeichnet, dass** das P1 gegenüberliegende Polpaar P3 um + 2/4 der Wellenlänge der 24. Harmonischen des Rastmomentes, gegenüber seiner Ruhelage verschoben ist.

5. Drehstrommaschine nach einem der Ansprüche 1 bis 4, **dadurch gekennzeichnet, dass** die magnetischen Pole (8,9) des Sekundärteiles (10) durch Permanentmagnete realisiert sind.

6. Drehstrommaschine nach Anspruch 5, **dadurch gekennzeichnet, dass** ein einziger Pol (8,9) eines Polpaare (P1-P12) aus mindestens zwei kleinen Einzelmagneten aufgebaut ist.

7. Drehstrommaschine **dadurch gekennzeichnet, dass** die Pole (8,9) durch ein auf dem Sekundärteil (10) aufgebrachtes, abschnittsweise im Sinne der Ansprüche 1 bis 4 permanent magnetisiertes, Material realisiert sind.

8. Drehstrommaschine nach einem der Ansprüche 1 bis 7, **dadurch gekennzeichnet, dass** die Pole (8,9) und/oder die Nuten zur Aufnahme der Drehstromwicklung geschrägt zur Motorachse angeordnet sind.

9. Drehstrommaschine nach einem der Ansprüche 1 bis 8, **dadurch gekennzeichnet, dass** es sich um eine konzentrierte Wicklung handelt.

10. Drehstrommaschine nach einem der Ansprüche 1 bis 9, **dadurch gekennzeichnet, dass** es sich um einen Generator handelt.

11. Drehstrommaschine nach einem der Ansprüche 1 bis 9, **dadurch gekennzeichnet, dass** es sich um einen Motor handelt.

12. Verwendung des Motors nach Anspruch 11 in einer Maschine für Werkzeug- und Formenbau, in Druckmaschinen und generell bei Antrieben für die Automatisierungstechnik.

13. Magnetisierungswerkzeug mit Magnetisierungsköpfen zur Herstellung eines Sekundärteiles (10) gemäß Anspruch 5 bis 7 **dadurch gekennzeichnet, dass** die Magnetisierungseinheiten (11) korrespondierend zu den am Sekundärteil (10) angebrachten Polen (8,9) angeordnet sind.

14. Montagewerkzeug zur Anbringung der magnetischen Pole (8,9) am Sekundärteil (10) gemäß Anspruch 5 bis 7 **dadurch gekennzeichnet, dass** die Bestückungsvorrichtung korrespondierend zur Geometrie des Sekundärteiles (10) aufgebaut ist.

## Claims

1. Polyphase machine having the following characteristics:
- primary part with N slots and m electrical winding sections;
- secondary part (1) having a total of p pole pairs (P1 - P4), each comprising two magnetic poles (2) which are located alongside one another and are of different polarity; wherein
1.1 the pole gap (6) between the poles of one pole pair is equal for all pole pairs (P1 - P4) and results from a uniform distribution of all the poles (2) on the secondary part (1);
1.2 at least one pole pair (P1 - P4) is shifted, with the pole gap (6) unchanged, through a predetermined distance (5) with respect to an equidistant distribution of all the pole pairs
**characterized in that**
if the slot/pole ratio N/P = 3:2, the pole pairs Pv (P1 - P4) are shifted through α*_{v,p}* = *^{v-1}*/*ₚ ; v*=*1* ...*p* (3, 4) of the wavelength of the 6 x p-th dominant harmonics of the cogging torque with respect to the rest position which results with a uniform distribution, thus decreasing or increasing the pole pair gaps (5).

2. Polyphase machine according to Claim 1, **characterized in that**, in the case of a motor having N=12 slots and p = 4 pole pairs (P1 - P4), the pole pair P2 alongside the reference pole pair P1 is shifted through + 1/4 of the wavelength of the 24th harmonic of the cogging torque, in the sense of reducing the pole pair gap (5) between P1 and P2.

3. Polyphase machine according to Claim 2, **characterized in that**, in addition, the pole pair P4 is shifted through - 1/4 of the wavelength of the 24th harmonic of cogging torque, in the sense of reducing the pole pair gap (5) between P1 and P4.

4. Polyphase machine according to Claim 3, **characterized in that** the pole pair P3 opposite P1 is shifted through + 2/4 of the wavelength of the 24th harmonics of the cogging torque with respect to its rest position.

5. Polyphase machine according to one of Claims 1 to 4, **characterized in that** the magnetic poles (8, 9) on the secondary part (10) are provided by permanent magnets.

6. Polyphase machine according to Claim 5, **characterized in that** a single pole (8, 9) of a pole pair (P1-P12) is formed from at least two small individual magnets.

7. Polyphase machine, **characterized in that** the poles (8, 9) are provided by a material which is applied to the secondary part (10) and is permanently magnetized in places, in the sense of Claims 1 to 4.

8. Polyphase machine according to one of Claims 1 to 7, **characterized in that** the poles (8, 9) and/or the slots for holding the polyphase winding are arranged inclined with respect to the motor axis.

9. Polyphase machine according to one of Claims 1 to 8, **characterized in that** this is a concentrated winding.

10. Polyphase machine according to one of Claims 1 to 9, **characterized in that** this is a generator.

11. Polyphase machine according to one of Claims 1 to 9, **characterized in that** this is a motor.

12. Use of the motor according to Claim 11 in a machine for tool construction and mould construction, in printing machines and in general in the case of drives for automation.

13. Magnetization tool having magnetization heads for production of a secondary part (10) according to Claims 5 to 7, **characterized in that** the magnetization units (11) are arranged corresponding to the poles (8, 9) which are fitted to the secondary part (10).

14. Assembly tool for fitting the magnetic poles (8, 9) to the secondary part (10) according to Claims 5 to 7, **characterized in that** the fitting apparatus is designed to correspond to the geometry of the secondary part (10).

## Revendications

1. Machine à courant triphasé comportant:
- un primaire ayant N encoches et m bobinages électriques,
- Un secondaire (1) ayant un nombre p de paires polaires (P1 - P4) comprenant chaque fois deux pôles magnétiques (2), juxtaposés et ayant des polarités différentes, et
1.1 les intervalles polaires (6) entre les pôles d'une paire polaire sont les mêmes pour toutes les paires polaires (P1 - P4), et résultent d'une équirépartition de tous les pôles (2) sur le secondaire (1),
1.2 au moins une paire polaire (P1 - P4) est décalée pour un intervalle polaire inchangé (6), d'une distance prédéterminée (5) par rapport à une répartition équivalente de toutes les paires polaires,
**caractérisée en ce que**
pour un rapport encoches/pôles - rapport N/P = 3:2, les paires polaires Pv (P1 - P4) sont décalées de *α_{v,p}* = *^{v-1}*/*p ; v* = *1... p* (3, 4) de la longueur d'onde de l'harmonique dominante d'ordre 6 x p du couple d'arrêt par rapport à la position de repos que l'on obtient dans le cas d'une répartition équilibrée et ainsi les intervalles des paires polaires (5) diminuent ou augmentent.

2. Machine à courant triphasé selon la revendication 1,
**caractérisée en ce que**
dans le cas d'un moteur ayant N = 12 encoches et p = 4 paires polaires (P1 - P4), la paire polaire P2 à côté de la paire polaire de référence P1 est décalée de + 1/4 de la longueur d'onde de la 24^{ème} harmonique du couple d'arrêt dans le sens d'une réduction de l'intervalle des paires polaires (5) entre P1 et P2.

3. Machine à courant triphasé selon la revendication 2,
**caractérisée en ce qu'**
en plus, la paire polaire P4 est décalée de - 1/4 de la longueur d'onde de la 24^{ème} harmonique du couple d'arrêt dans le sens d'une réduction de l'intervalle polaire (5) entre P1 et P4.

4. Machine à courant triphasé selon la revendication 3,
**caractérisée en ce que**
la paire polaire P1 en regard de la paire polaire P3 est décalée de + 2/4 de la longueur d'onde de la 24^{ème} harmonique du couple résiduel par rapport à sa position de repos.

5. Machine à courant triphasé selon les revendications 1 à 4,
**caractérisée en ce que**
les pôles magnétiques (8, 9) du secondaire (10) sont des aimants permanents.

6. Machine à courant triphasé selon la revendication 5,
**caractérisée en ce qu'**
un unique pôle (8, 9) de la paire polaire (P1 - P12) est formé d'au moins deux petits aimants distincts.

7. Machine à courant triphasé
**caractérisée en ce que**,
des pôles (8, 9) sont réalisés avec un matériau appliqué sur le secondaire (10), et aimantés de manière permanente dans le sens des revendications 1 à 4.

8. Machine à courant triphasé selon les revendications 1 à 7,
**caractérisée en ce que**
les pôles (8, 9) et/ou les encoches recevant les bobinages sont installés en biais par rapport à l'axe du moteur.

9. Machine à courant triphasé selon les revendications 1 à 8,
**caractérisée en ce qu'**
il s'agit d'un bobinage concentrique.

10. Machine à courant triphasé selon les revendications 1 à 9,
**caractérisée en ce qu'**
il s'agit d'un générateur.

11. Machine à courant triphasé selon les revendications 1 à 9,
**caractérisée en ce qu'**
il s'agit d'un moteur.

12. Application du moteur selon la revendication 11 à une machine pour des outils ou la construction de moules, à des machines d'impression et généralement à l'entraînement dans la technique d'automatisation.

13. Outil d'aimantation comportant une tête d'aimantation pour réaliser un secondaire (10) selon les revendications 5 à 7,
**caractérisé en ce que**
les unités d'aimantation (11) sont installées de façon à correspondre aux pôles (8, 9) prévus sur le secondaire (10).

14. Outil de montage pour installer les pôles magnétiques (8, 9) sur le secondaire (10) selon les revendications 5 à 7,
**caractérisé en ce que**
le dispositif de garnissage est réalisé pour correspondre à la géométrie du secondaire (10).
